# EUROPÄISCHE PATENTSCHRIFT

(11) **EP 3 946 696 B1**
(45) Veröffentlichungstag und Bekanntmachung des Hinweises auf die Patenterteilung: **19.03.2025**
(21) Anmeldenummer: 20719952.2
(22) Anmeldetag: 02.04.2020
(51) Int. Cl.: B01D 61/14, C02F 1/44, F28C 1/14, F28D 5/02, F28F 19/01, C02F 1/50, C02F 103/02

(54) **RÜCKKÜHLANLAGE UND VERFAHREN ZUM BETREIBEN EINER RÜCKKÜHLANLAGE**
RECOOLING SYSTEM AND METHOD FOR OPERATING A RECOOLING SYSTEM
INSTALLATION DE REFROIDISSEMENT ET PROCÉDÉ DE FONCTIONNEMENT D'UNE INSTALLATION DE REFROIDISSEMENT

(30) Priorität: 02.04.2019 DE 202019001503 U
(43) Veröffentlichungstag der Anmeldung: 09.02.2022
(73) Patentinhaber: SFC Umwelttechnik GmbH, 5020 Salzburg (AT); Waterplus GmbH, 83026 Rosenheim (DE)
(72) Erfinder: FÄRBER, Robert, 83024 Rosenheim (DE); WUTSCHER, DR., Konrad Falko, 5081 Anif (AT); JABORNIG, Simon, 5020 Salzburg (AT); URSTÖGER, Franz, 4893 Zell am Moos (AT); MAYER, Roland, 5023 Salzburg (AT)
(74) Vertreter: HGF
(86) Internationale Anmeldenummer: PCT/EP2020/059405
(87) Internationale Veröffentlichungsnummer: WO 2020/201424

(56) Entgegenhaltungen:
- CN-A- 108 253 815
- US-A1- 2013 056 413
- US-A1- 2015 125 212

## Beschreibung

Die vorliegende Erfindung betrifft eine Rückkühlanlage, sowie ein Verfahren zum Betreiben einer Rückkühlanlage.

Rückkühlanlagen dienen zum Kühlen eines Temperier-Mediums, das über einen Wärmetauscher gekühlt wird, indem ein Luftstrom, dem Wasser zugesetzt ist, auf eine Oberfläche des Wärmetauschers geleitet wird. Mit dem Wasser wird die Oberfläche des Wärmetauschers benetzt, so dass der Oberfläche durch das Wasser Wärme entzogen wird. Ein Teil des Wassers verdunstet und führt zu einem weiteren Kühleffekt. Der andere Teil des Wassers wird gesammelt und in einem Kreislauf zirkuliert.

Rückkühlanlagen sind seit langem bekannt (z.B. DE 2 322 037 A).

Weitere Rückkühlanlagen gehen bspw. aus der DE 103 16 045 A1 bzw. DE 100 19 528 B4 hervor.

Den Rückkühlanlagen liegt das Problem zugrunde, dass das aus dem Luftstrom zugesetzte Wasser am Wärmetauscher erwärmt wird und in intensivem Kontakt mit der Luft steht, so dass sich darin Keime ansammeln und vermehren können. Durch das Verdunsten des Wassers werden auch sonstige Partikel, wie Pollen und Ruß mit dem im Kreislauf verbleibenden Wasser konzentriert. Um darin befindliche Keime, insbesondere Bakterien, abzutöten, wird dem sich im Kreislauf befindlichen Wasser regelmäßig Biozid hinzugesetzt. Die Zugabe von Bioziden führt zu einer Versalzung des Wassers. Das Wasser ist daher regelmäßig auszutauschen.

Es hatte einmal einen Unfall gegeben, bei dem mit Legionellen verseuchte Aerosole ausgetreten sind und viele Menschen in der Umgebung krank geworden sind. Seit dem achtet man strengstens darauf, dass regelmäßig und ausreichend Biozid hinzugesetzt wird.

Membranfilter, beispielsweise in Form von Hohlfasern sind seit langem bekannt (z.B. EP 0 554 567 A1 oder DE 31 49 423 A1).

Weitere Membranfilter gehen beispielsweise aus der DE 102 20 916 A1 oder DE 10 2016 108 202 A1 hervor.

In der DE 10 2009 040 110 A1 ist eine Kondensat-Reinigungsanlage eines Kraftwerkes beschrieben, bei welcher Filterelemente aus keramischen Membranen zum Reinigen des Kondensators eingesetzt werden.

Membrane können jedoch auch für anderen Anwendungen, wie z.B. zum Eintrag von Sauerstoff in Wasser eingesetzt werden (siehe z.B. DE 199 50 457 A1).

Die CN 108 253 815 A betrifft einen Kühlturm bzw. eine Rückkühlanlage, welcher/welche einen Wärmetauscher, ein Gebläse, Wassersprühdüsen und ein Sammelbecken umfasst. Zusätzlich dazu weist die Rückkühlanlage ein externes Filtersystem auf, welches neben dem Filter selbst drei Ventile und eine Wasserpumpe umfasst.

Aus der US 2013/056 413 A1 geht eine Umlaufwasser-Aufbereitungsanlage für Kühlwerke hervor, welche ein Kühlsystem umfasst. Aus dem Kühlsystem gelangt sich ansammelndes Wasser über die Leitung mittels der Pumpe in die Filtereinrichtung, wo es zum Beispiel mittels Ultrafiltration gereinigt werden kann. Von dort gelangt es dann weiter über eine Umkehrosmose-Einheit zurück in den Kühlbereich.

Die US 2015/125 212 A1 zeigt Wasseraufbereitungsanlagen für Wasser in schwimmenden Seen. Es wird mittels eines Saugers Wasser vom Grund des Sees eingesaugt und dann durch eine Filteranlage gepumpt. Als Filter kommen unter anderem Ultrafilter in Frage. Das gefilterte Wasser wird dann über eine Leitung zurück in den See gepumpt.

Der vorliegenden Erfindung liegt die Aufgabe zugrunde, eine Rückkühlanlage sowie ein Verfahren zum Betreiben einer solchen Rückkühlanlage zu schaffen, mit welchem das im Kreislauf geführte Wasser mit einem wesentlich geringeren Einsatz an Biozid und mit wesentlich längeren Verweilzeiten als im Vergleich zu herkömmlichen Kühlwerken betrieben werden kann. Somit kann auch mit geringen Mengen an Biozid sicher eine übermäßige Keimbelastung, insbesondere Legionellenbelastung, im Wasser verhindert werden.

Die Aufgabe wird durch die Gegenstände der unabhängigen Patentansprüche gelöst. Vorteilhafte Ausgestaltungen sind in den jeweiligen Unteransprüchen angegeben.

Erfindungsgemäß ist eine Rückkühlanlage umfassend einen Wärmetauscher, dessen Oberfläche mit einem Luftstrom, dem Wasser zugesetzt wird, gekühlt wird. Weiterhin umfasst die Rückkühlanlage ein Sammelbecken zum Sammeln des Wassers, eine erste Leitung und eine zweite Leitung, und eine Umlaufwasser-Aufbereitungsanlage, die ein Umlaufwasserreservoir, eine Filtereinrichtung und eine Filtrationspumpe aufweist, die in einem Reinigungskreislauf geschaltet sind. Das Wasser vom Sammelbecken kann mittels der ersten Leitung dem Umlaufwasserreservoir zugeführt werden, wobei die Filtrationspumpe zum Umwälzen von Rücckühlwasser in dem Reinigungskreislauf vorgesehen ist, so dass das Wasser mittels der Filtereinrichtung gereinigt und das gereinigte Wasser über eine Leitung wieder dem Umlaufwasserreservoir zugeführt werden kann. Das im Umlaufwasserreservoir befindliche Wasser kann als gereinigtes Kühlwasser über die zweite Leitung erneut in den Luftstrom rückgeführt werden.

Das Rückkühlwasser wird somit gefiltert, um die Konzentration von Keimen und sonstigen Partikeln zu reduzieren.

Die Erfinder der vorliegenden Erfindung haben herausgefunden, dass durch das Filtern des Wassers der Bedarf an Bioziden zumindest auf ein Zehntel des üblichen Bedarfes reduziert werden kann. In herkömmlichen Rückkühlanlagen werden pro Tag etwa 5 l Biozid dem Wasser zugesetzt. Alleine in Deutschland gibt es mehr als 100.000 Rückkühlanlagen. Würden all diese Rückkühlanlagen mit einer erfindungsgemäßen Umlaufwasser-Aufbereitungsanlage ausgerüstet werden, dann könnten mehr als 100.000 t Biozid pro Jahr eingespart werden.

Mit der Filtereinrichtung der Umlaufwasser-Aufbereitungsanlage werden die Keime nicht getötet. Die Erfinder haben jedoch erkannt, dass die Keime zum Großteil zuverlässig herausgefiltert werden können und die Filtereinrichtung, wie es unten näher erläutert wird, in regelmäßigen Abständen gereinigt werden kann, so dass eine mit Keimen und Partikeln konzentrierte Flüssigkeit umweltgerecht entsorgt werden kann.

Als Filtereinrichtung eignet sich besonders ein Membranfilter, wie er beispielsweise in der DE 102 20 916 A1 beschrieben ist. Solche Membranfilter können bei kleinen Filtervolumen eine große Oberfläche aufweisen.

Die Filtereinrichtung weist vorzugsweise einen Filter mit einer Porengrößen von maximal 1 µm, insbesondere maximal 0,5 µm und besonders bevorzugt maximal 0,1 µm auf. Die maximale Porengröße kann auch 0,05 µm bzw. 0,02 µm oder sogar lediglich 0,01 µm betragen. Bei derart kleinen Poren werden Keime und sonstige Partikel zuverlässig aus dem Wasser gefiltert.

Es kann eine Spüleinrichtung vorgesehen sein, mit welcher Wasser und/oder Luft in Strömungsrichtung der Filtereinrichtung oder entgegen der Strömungsrichtung der Filtereinrichtung gespült werden kann. Dies dient zum Reinigen der Filtereinrichtung. Das Spülen kann in Strömungsrichtung oder entgegen der Strömungsrichtung erfolgen. Sehr effizient ist ein Spülen entgegen der Strömungsrichtung, ein sogenanntes Rückspülen mit einem Wasser-/Luft-Gemisch. Zusätzlich kann eine Reinigungschemikalie gleichzeitig oder unabhängig vom Spülvorgang zugesetzt werden. Die Reinigungschemikalie kann ein Biozid oder auch ein Oxidationsmittel, eine Säure oder eine Base sein.

Gemäß einem weiteren Aspekt der Erfindung wird ein Verfahren zum Betreiben einer Rückkühlanlage, bei welchem eine Oberfläche eines Wärmetauschers durch Benetzen mit Wasser gekühlt wird und das Wasser in einem Sammelbecken gesammelt und mit einem Wasserkreislauf zum erneuten Benetzen der Oberfläche des Wärmetauschers zurückgeführt wird. Das Verfahren zeichnet sich dadurch aus, dass das Wasser mittels eines Filters gereinigt wird. Hierdurch kann der Einsatz von Bioziden im Vergleich zu herkömmlichen Rückkühlanlagen erheblich reduziert werden.

Gemäß der Erfindung wird bei dem Verfahren eine oben erläuterte Rückkühlanlage eingesetzt.

Das Wasser kann mit einem Membranfilter gereinigt werden.

Die Filtereinrichtung kann regelmäßig mit Wasser oder Luft oder einem Wasser-/Luftgemisch gespült werden. Das Spülen kann entgegen zur oder in Strömungsrichtung beim Filterbetrieb ausgeführt wird. Vorzugsweise wird ein sogenanntes Rückspülen durchgeführt, das heißt, dass die Strömungsrichtung entgegen der Richtung beim Filterbetrieb ist. Dies ist insbesondere mit einem Wasser-Luft-Gemisch bei Membranfiltern wirksam.

Beim Spülen kann eine Reinigungschemikalie zugesetzt werden.

Das Wasser kann in einem Umlaufwasserreservoir zwischengespeichert werden und in einem Reinigungskreislauf, in dem die Filtereinrichtung angeordnet ist, zum Reinigen des Wasser umgewälzt werden. Es wird somit zum Wasserkreislauf der Rückkühlanlage ein zweiter Kreislauf, der Reinigungskreislauf vorgesehen, in dem das Wasser unabhängig vom Betrieb der Rückkühlanlage zirkuliert werden kann.

Dem Wasser kann als Biozid Chlordioxid mit einer Wirkstoffkonzentration von 3000 ppm oder Natriumhypochlorit mit einer Wirkstoffkonzentration von 1600 ppm in einer Menge von nicht mehr als 0,3 mg/l Wasser und Stunde, insbesondere nicht mehr als 0,2 mg/l Wasser und Stunde bzw. nicht mehr als 0,1 mg/l Wasser und Stunde zugegeben wird.

Die Erfindung wird nachfolgend beispielhaft näher anhand der Zeichnungen erläutert. Die Zeichnungen zeigen schematisch in:
- Fig. 1: einen Reinigungskreislauf in einem Blockschalbild, und

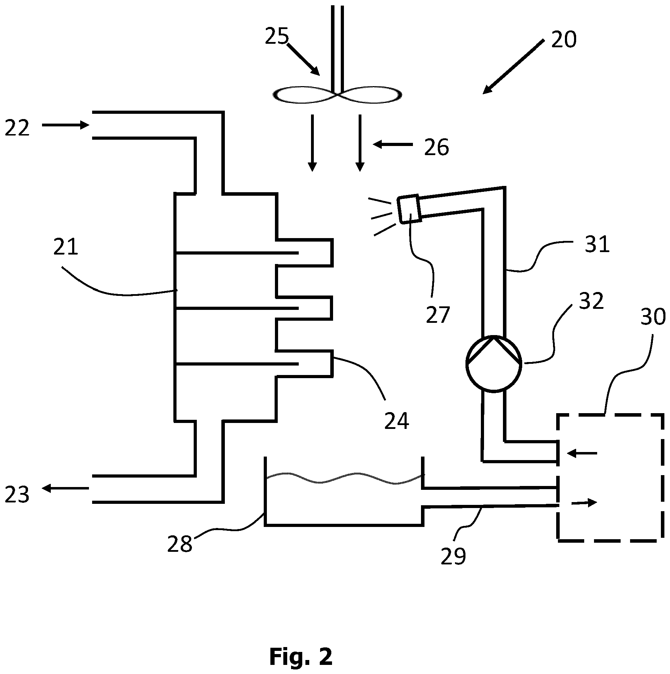

- Fig. 2: einen Wärmetauscher einer Rückkühlanlage mit einem Wasserkreislauf in einem Blockschaltbild.

Eine erfindungsgemäße Rückkühlanlage 20 weist einen Wärmetauscher 21 mit einem Eingang 22 zum Zuführen eines Temperier-Mediums und einen Ausgang 23 zum Abführen des Temperier-Mediums auf. Der Wärmetauscher 21 ist mit mehreren Lamellen 24 versehen, die vom Temperier-Medium durchströmt werden.

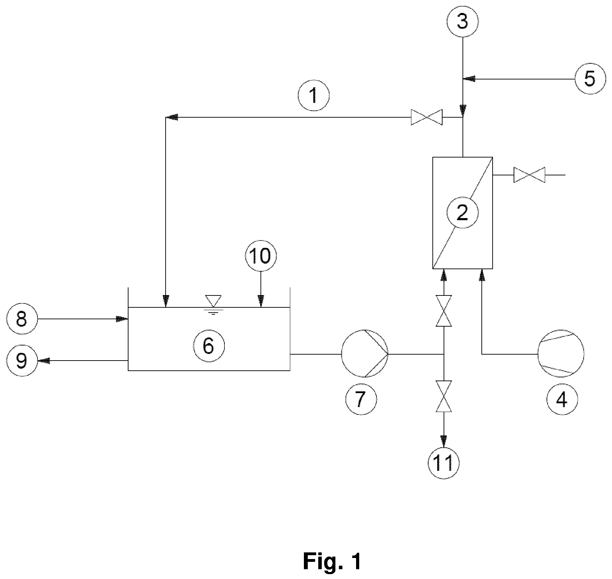

Eine Gebläseeinrichtung 25 erzeugt einen Luftstrom 26, welcher auf die Lamellen 24 gerichtet ist, um diese zu kühlen. Mit einer Düse 27 wird Kühlwasser in den Luftstrom 26 eingespritzt, das die Lamellen 24 benetzt. Die Lamellen 24 werden von dem Wasser gekühlt. Ein Teil des Wassers verdunstet und erzeugt hierdurch einen zusätzlichen Kühleffekt. Das restliche Wasser tropft ab und wird in einem Sammelbecken 28 gesammelt. Vom Sammelbecken 28 wird das Wasser mittels einer Leitung 29 zu einer Umlaufwasser-Aufbereitungsanlage 30 geleitet, welche in Figur 1 genauer dargestellt ist und unten näher beschrieben wird. In der Umlaufwasser-Aufbereitungsanlage 30 wird das Wasser gereinigt und dann über die Leitung 31 mittels einer Pumpe 32 zur Düse 27 gefördert und erneut dem Luftstrom 26 zugeführt. Hierdurch wird das Wasser in einem Reinigungskreislauf zirkuliert.

Wie es eingangs erläutert ist, ist das im Sammelbecken 28 gesammelte Wasser aufgrund des intensiven Luftkontaktes mit Keimen oder sonstigen Partikeln kontaminiert. Diese kontaminierte Wasser 8 wird einem Umlaufwasserreservoir 6 zugeführt und dort zwischengespeichert. Das im Umlaufwasserreservoir 6 befindliche Wasser kann, wie es nachfolgend erläutert wird, gereinigt werden und als gereinigtes Kühlwasser 9 dem Wasserkreislauf wieder zugeführt werden.

Mit einer Filtrationspumpe 7 kann aus dem Umlaufwasserreservoir 6 Wasser abgezogen und einer Filtereinrichtung 2 zugeführt werden. Die Filtereinrichtung 2 ist als Membranfilter ausgebildet. Vorzugsweise werden eine oder mehrere Filterkartuschen mit einer Hohlfasermembrananordnung vorgesehen, wie sie in der DE 102 20 916 A1 beschrieben sind.

Das gereinigte Wasser 1 (Permeat) wird über eine Leitung zurück zum Umlaufwasserreservoir 6 geführt. Das Wasser des Umlaufwasserreservoirs 6 kann mehrfach zirkuliert werden, bevor es dem Wasserkreislauf der Rückkühlanlage 20 wieder zugeführt wird.

An die Filtereinrichtung 2 ist eine Gebläsegasspülung 4 angeschlossen, mit welcher Gas zum Reinigen der Filtereinrichtung zugeführt werden kann. Im vorliegenden Ausführungsbeispiel ist die Gebläsegasspülung 4 auf der Eingangsseite der Filteranordnung 2 angeordnet, so dass das Reinigungsgas, das in der Regel Luft ist, der Filtereinrichtung auf der selben Seite wie das Wasser (Filtrat) zugeführt wird. Im Rahmen der Erfindung ist es selbstverständlich auch möglich, die Gebläsegasspülung 4 am Ausgang der Filtereinrichtung oder eine zusätzliche Gebläsegasspülung hier vorzusehen.

An der Ausgangsseite der Filtereinrichtung 2 ist eine Wasserrückspüleinrichtung 3 angeordnet, welche in der Regel ein Anschluss an eine Frischwasserleitung ist. Mit dem Frischwasser kann die Filtereinrichtung entgegen der Strömungsrichtung beim Filterbetrieb rückgespült werden. An die Wasserrückspüleinrichtung 3 kann eine Chemikaliendosierung 5 gekoppelt sein, mit welcher Reinigungschemikalien dem Frischwasser zum Rückspülen der Filtereinrichtung 2 zugeführt werden kann.

Mit einer solchen Rückkühlanlage wurden folgende Versuche durchgeführt:

### Versuch 1

Als Biozid wurde Natriumhypochlorit (Wirkstoffkonzentration im Produkt 1600 ppm entspricht 1600 mg/l) verwendet. Mit einem standardisierten Messverfahren wurde in regelmäßigen Abständen ermittelt, ob die vorgeschriebenen Grenzwerte für Legionellen eingehalten werden.

Als Filtereinrichtungen wurde jeweils vier C-MEM Kartuschen, erhältlich von SFC der Umwelttechnik GmbH, Salzburg, Österreich, verwendet, welche zusammen eine Filterfläche von insgesamt 24 qm aufweisen. Die maximale Porengröße betrug 0,02 µm.

Ohne Filtration war eine Dosierung von zumindest 1 mg/l Umlaufwasser und Stunde notwendig. Das entspricht 0,625 l Biozid pro 1000 l und Stunde bzw. 15 l pro 1000 l Umlaufwasser und Tag.

Mit der Filtration hat eine Dosierung von nicht mehr als 0,1 mg/l Umlaufwasser und Stunde genügt, um auf Dauer die Grenzwerte einzuhalten. Dies entspricht weniger als 10% wie es ohne Filtration notwendig ist bzw. weniger als 1,5 l pro 1000 l und Tag.

### Versuch 2

Als Biozid wurde Chlordioxid (Wirkstoffkonzentration im Produkt 3000 ppm entspricht 3000 mg/l) verwendet. Im übrigen wurde der gleiche Versuch wie oben durchgeführt.

Ohne Filtration war eine Dosierung von mehr als 1 mg/l Umlaufwasser und Stunde notwendig. Dies entspricht 0,333 l Biozid pro 1000l und Stunde bzw. 8 l pro 1000 l Umlaufwasser und Tag.

Mit der Filtration genügte eine Dosierung von nicht mehr als 0,1 mg/l Umlaufwasser und Stunde, um die Grenzwerte auf Dauer einzuhalten. Dies entspricht weniger als 10% der ohne Filtration notwendigen Menge bzw. 0,8 l pro 1000 l und Tag.

Durch das Vorsehen des Umlaufwasserreservoirs 6 ist der Betrieb des Wasserkreislaufs der Rückkühlanlage 20 vom Filterbetrieb der Umlaufwasser-Aufbereitungsanlage entkoppelt. In beiden Kreisläufen kann unabhängig voneinander Wasser zirkuliert werden. Diese beiden Kreisläufe können gleichzeitig oder auch alternierend betrieben werden.

Im Betrieb ist es oftmals so, dass zunächst der Wasserkreislauf in Betrieb genommen wird. Ab einer gewissen Betriebsdauer ist davon auszugehen, dass das Wasser eine gewisse Kontamination aufweist. Dies beruht auf Erfahrungswerten und hängt stark von der Keim- und Partikelbelastung der Umgebungsluft und der Umgebungstemperatur ab. Hierzu gibt es gesicherte Erfahrungswerte. Spätestens wenn eine vorbestimmte Keim- oder Partikelbelastung vorliegt, wird die Umlaufwasser-Aufbereitungsanlage 30 in Betrieb genommen und Wasser über die Filtereinrichtung 2 zirkuliert und gereinigt. Dieser Reinigungsbetrieb kann fortgesetzt werden, selbst wenn die Kühlanlage nicht mehr in Betrieb ist und deren Wasserkreislauf stillsteht.

Durch diese Entkopplung ist es möglich, selbst bei einer relativ kleinen, kompakten Filtereinrichtung eine große Menge an Kühlwasser auf Dauer im Wesentlichen kontaminationsfrei zu halten und den Bedarf an Bioziden im Vergleich zu herkömmlichen Anlagen erheblich zu reduzieren.

Im Rahmen der Erfindung ist es auch möglich, anstelle eines Umlaufwasserreservoirs 6 zwei Wasserreservoire für das an der Umlaufwasser-Aufbereitungsanlage eingehende, kontaminierte Wasser und das von der Umlaufwasser-Aufbereitungsanlage 30 ausgehende, nicht kontaminierte Wasser vorzusehen. Diese beiden Reservoire können getrennt voneinander ausgebildet sein. Vorzugsweise sind sie jedoch über eine Leitung miteinander verbunden, in welcher zumindest ein Steuerventil und insbesondere auch eine Förderpumpe angeordnet sind, so dass auch hier eine mehrfache Rezirkulation des Wassers möglich ist und gezielt angesteuert werden kann.

Nachfolgend sind Beispiele der Erfindung angegeben:
1. Beispiel: Rückkühlanlage gemäß dem Anspruch 1, dadurch gekennzeichnet,
   dass die Umlaufwasser-Aufbereitungsanlage derart ausgebildet ist, dass eine zyklische oder permanente Zirkulation des kontaminierten Rückkühlwassers durch die Umlaufwasser-Aufbereitungsanlage und damit eine teilweise oder vollständige Entfernung von Mikroorganismen und anderen partikulären Schmutzstoffen aus dem Umlaufwasser erfolgt.
2. Beispiel: Rückkühlanlage nach dem 1. Beispiel, dadurch gekennzeichnet,
   dass die Umlaufwasser-Aufbereitungsanlage derart ausgebildet ist, dass das Reinigen des Umlaufwassers physikalisch durch eine Filtration nach dem Prinzip des Größenausschluss für partikuläre Stoffe > 0,1 µm durchgeführt wird.
3. Beispiel: Rückkühlanlage nach dem 1. oder 2. Beispiel, dadurch gekennzeichnet,
   dass die Filtrationsleistung wahlweise durch eine zyklische Wasserspülung des Filters und/oder wahlweise durch eine zyklische Gasspülung des Filters und/oder wahlweise durch eine zyklische chemische Reinigung des Filters über Einbringung von oxidativen und/oder wahlweise alkalischen und/oder wahlweise sauren Reinigungschemikalien über eine Rückspülung konstant gehalten werden kann.
4. Rückkühlanlage nach einem der 1. bis 3. Beispiele, dadurch gekennzeichnet,
   dass die Umlaufwasser-Aufbereitungsanlage weiterhin umfasst
      eine Wasserrückspülung (3) für die Filtereinrichtung (2), und/oder
      eine Gebläsegasspülung (4) für die Filtereinrichtung (2), und/oder
   eine Chemikaliendosierung (5) für eine chemische Reinigung der Filtereinrichtung (2).

### Bezuaszeichenliste

- 1: Gereinigtes Permeat als Rezirkulat
- 2: Filtereinrichtung
- 3: Wasserrückspülung
- 4: Gebläsegasspülung
- 5: Chemikaliendosierung für chemische Reinigung
- 6: Umlaufwasserreservoir
- 7: Filtrationspumpe
- 8: Kontaminiertes Kühlwasser
- 9: Gereinigtes Kühlwasser
- 10: Nachspeisung Frischwasser
- 11: Konzentratableitung

- 20: Rückkühlanlage
- 21: Wärmetauscher
- 22: Eingang
- 23: Ausgang
- 24: Lamelle
- 25: Gebläseeinrichtung
- 26: Luftstrom
- 27: Düse
- 28: Sammelbecken
- 29: Leitung
- 30: Umlaufwasser-Aufbereitungsanlage
- 31: Leitung
- 32: Pumpe

## Patentansprüche

1. Rückkühlanlage, umfassend
einen Wärmetauscher (21), dessen Oberfläche mit einem Luftstrom, dem Wasser zugesetzt wird, gekühlt wird,
ein Sammelbecken (28) zum Sammeln des Wassers,
eine erste Leitung (29) und eine zweite Leitung (31), und
eine Umlaufwasser-Aufbereitungsanlage (30), die ein Umlaufwasserreservoir (6), eine Filtereinrichtung (2) und eine Filtrationspumpe (7) aufweist, die in einem Reinigungskreislauf geschaltet sind,
wobei das Wasser vom Sammelbecken (28) mittels der ersten Leitung (29) dem Umlaufwasserreservoir (6) zugeführt werden kann,
wobei die Filtrationspumpe (7) zum Umwälzen von Rückkühlwasser in dem Reinigungskreislauf vorgesehen ist, so dass das Wasser mittels der Filtereinrichtung (2) gereinigt und das gereinigte Wasser (1) über eine Leitung wieder dem Umlaufwasserreservoir (6) zugeführt werden kann,
wobei das im Umlaufwasserreservoir (6) befindliche Wasser als gereinigtes Kühlwasser (9) über die zweite Leitung (31) erneut in den Luftstrom rückgeführt werden kann.

2. Rückkühlanlage nach Anspruch 1,
**dadurch gekennzeichnet,**
**dass** die Filtereinrichtung (2) einen Membranfilter aufweist.

3. Rückkühlanlage nach Anspruch 1 oder 2,
**dadurch gekennzeichnet,**
**dass** die Filtereinrichtung (2) einen Filter mit einer Porengröße von maximal 1 µm, vorzugsweise maximal 0,5 µm und insbesondere maximal 0,1 µm bzw. maximal 0,05 µm aufweist.

4. Rückkühlanlage nach einem der Ansprüche 1 bis 3,
**dadurch gekennzeichnet,**
**dass** eine Spüleinrichtung (3, 4) vorgesehen ist, welche mit Wasser und/oder Luft in und/oder entgegen zur Strömungsrichtung die Filtereinrichtung (2) spülen kann.

5. Rückkühlanlage nach einem der Ansprüche 1 bis 4,
**dadurch gekennzeichnet,**
**dass** eine Chemikaliendosierung (5) zum Zuführen einer Reinigungschemikalie zur Filtereinrichtung (2) vorgesehen ist.

6. Verfahren zum Betreiben einer Rückkühlanlage nach einem der Ansprüche 1 bis 5,
wobei eine Oberfläche des Wärmetauschers (21) durch Benetzen mit Wasser gekühlt wird und das Wasser in dem Sammelbecken (28) gesammelt wird,
wobei das Wasser vom Sammelbecken (28) mittels der ersten Leitung (29) dem Umlaufwasserreservoir (6) zugeführt wird,
wobei die Filtrationspumpe (7) das Rückkühlwasser in dem Reinigungskreislauf umwälzt, so dass das Wasser mittels der Filtereinrichtung (2) gereinigt wird, und das gereinigte Wasser (1) über eine Leitung wieder dem Umlaufwasserreservoir (6) zugeführt wird,
wobei das im Umlaufwasserreservoir (6) befindliche Wasser als gereinigtes Kühlwasser (9) über die zweite Leitung (31) erneut in den Luftstrom zum erneuten Benetzen der Oberfläche des Wärmetauschers (21) rückgeführt wird.

7. Verfahren nach Anspruch 6,
**dadurch gekennzeichnet,**
**dass** das Rückkühlwasser mit einem Membranfilter gereinigt wird.

8. Verfahren nach Anspruch 6 oder 7,
**dadurch gekennzeichnet,**
**dass** der Filter regelmäßig mit Wasser oder Luft oder einem Wasser-/Luftgemisch gespült wird.

9. Verfahren nach Anspruch 8,
**dadurch gekennzeichnet,**
**dass** das Spülen entgegen zur oder in Strömungsrichtung beim Filterbetrieb ausgeführt wird.

10. Verfahren nach Anspruch 8 oder 9,
**dadurch gekennzeichnet,**
**dass** beim Spülen eine Reinigungschemikalie zugesetzt wird.

11. Verfahren nach Anspruch einem der Ansprüche 6 bis 10,
**dadurch gekennzeichnet,**
**dass** das Rückkühlwasser im Reinigungskreislauf zyklisch oder permanent umgewälzt wird.

12. Verfahren nach Anspruch einem der Ansprüche 6 bis 11,
**dadurch gekennzeichnet,**
**dass** der Wasserkreislauf der Rückkühlanlage und der Reinigungskreislauf gleichzeitig oder alternierend betrieben werden.

13. Verfahren nach einem der Ansprüche 6 bis 12,
**dadurch gekennzeichnet,**
**dass** dem Rückkühlwasser ein Biozid zugegeben wird, wobei dem Rückkühlwasser als Biozid vorzugsweise Chlordioxid mit einer Wirkstoffkonzentration von 3000 ppm oder Natriumhypochlorit mit einer Wirkstoffkonzentration von 1600 ppm in einer Menge von nicht mehr als 0,3 mg/l Wasser und Stunde zugegeben wird.

## Claims

1. Recooling system, comprising
a heat exchanger (21), the surface of which is cooled by a stream of air to which water is added,
a collecting basin (28) for collecting the water,
a first line (29) and a second line (31), and
a circulating water treatment system (30), which has a circulating water reservoir (6), a filter device (2) and a filtration pump (7), which are connected in a cleaning circuit,
whereby the water from the collecting basin (28) can be fed to the circulating water reservoir (6) by means of the first pipe (29),
wherein the filtration pump (7) is provided for circulating recooling water in the cleaning circuit, so that the water can be cleaned by means of the filter device (2) and the cleaned water (1) can be fed back to the circulating water reservoir (6) via a pipe,
whereby the water in the circulating water reservoir (6) can be returned to the air flow as purified cooling water (9) via the second line (31).

2. Recooling system according to claim 1,
**characterised in that** the filter device (2) has a membrane filter.

3. Recooling system according to claim 1 or 2,
**characterised in that** the filter device (2) has a filter with a pore size of maximum 1 µm, preferably maximum 0.5 µm and in particular maximum 0.1 µm or maximum 0.05 µm.

4. Recooling system according to one of claims 1 to 3,
**characterised in that** a flushing device (3, 4) is provided which can flush the filter device (2) with water and/or air in and/or against the direction of flow.

5. Recooling system according to one of claims 1 to 4,
**characterised in that** a chemical dosing unit (5) is provided for supplying a cleaning chemical to the filter device (2).

6. Method for operating a recooling system according to any one of claims 1 to 5,
wherein a surface of the heat exchanger (21) is cooled by wetting with water and the water is collected in the collecting basin (28),
wherein the water is fed from the collecting basin (28) to the circulating water reservoir (6) by means of the first pipe (29),
wherein the filtration pump (7) circulates the recooling water in the cleaning circuit so that the water is cleaned by means of the filter device (2), and the cleaned water (1) is fed back to the recirculating water reservoir (6) via a pipe,
whereby the water in the circulating water reservoir (6) is returned to the air flow as purified cooling water (9) via the second line (31) to re-wet the surface of the heat exchanger (21).

7. Method according to claim 6,
**characterised in that** the recooling water is cleaned with a membrane filter.

8. Method according to claim 6 or 7,
**characterised in that** the filter is regularly rinsed with water or air or a water/air mixture.

9. Method according to claim 8,
**characterised in that** the flushing is carried out against or in the direction of flow during filter operation.

10. Method according to claim 8 or 9,
**characterised in that** a cleaning chemical is added during rinsing.

11. The method according to any one of claims 6 to 10,
**characterised in that** the recooling water in the cleaning circuit is circulated cyclically or permanently.

12. The method according to any one of claims 6 to 11,
**characterised in that** the water circuit of the recooling system and the cleaning circuit are operated simultaneously or alternately.

13. A method according to any one of claims 6 to 12,
**characterised in that** a biocide is added to the recooling water, preferably chlorine dioxide with an active substance concentration of 3000 ppm or sodium hypochlorite with an active substance concentration of 1600 ppm being added to the recooling water as biocide in an amount of not more than 0.3 mg/l of water and hour.

## Revendications

1. Installation de refroidissement à l'arrière, comprenant
un échangeur de chaleur (21) dont la surface est refroidie par un courant d'air auquel de l'eau est ajoutée,
un bassin de collecte (28) pour recueillir l'eau,
un premier conduit (29) et un deuxième conduit (31), et
une installation de traitement d'eau de circulation (30), qui comprend un réservoir d'eau de circulation (6), un dispositif de filtration (2) et une pompe de filtration (7), qui sont connectés dans un circuit de nettoyage,
l'eau du bassin de collecte (28) pouvant être amenée au réservoir d'eau de circulation (6) au moyen de la première conduite (29),
la pompe de filtration (7) étant prévue pour faire circuler l'eau de refroidissement de retour dans le circuit de nettoyage, de sorte que l'eau peut être nettoyée au moyen du dispositif de filtration (2) et que l'eau nettoyée (1) peut être renvoyée au réservoir d'eau de circulation (6) par l'intermédiaire d'une conduite,
l'eau se trouvant dans le réservoir d'eau de circulation (6) pouvant être réintroduite dans le flux d'air en tant qu'eau de refroidissement purifiée (9) via la deuxième conduite (31).

2. Installation de refroidissement par retour d'air selon la revendication 1,
**caractérisé en ce que** le dispositif de filtration (2) comprend un filtre à membrane.

3. Installation de refroidissement à reflux selon la revendication 1 ou 2,
**caractérisé en ce que** le dispositif de filtration (2) présente un filtre avec une taille de pores de 1 µm maximum, de préférence de 0,5 µm maximum et en particulier de 0,1 µm maximum ou de 0,05 µm maximum.

4. Installation de refroidissement à l'arrière selon l'une des revendications 1 à 3, **caractérisé en ce qu'**il est prévu un dispositif de rinçage (3, 4) qui peut rincer le dispositif de filtration (2) avec de l'eau et/ou de l'air dans le sens d'écoulement et/ou dans le sens contraire.

5. Installation de refroidissement à l'arrière selon l'une des revendications 1 à 4, **caractérisé en ce qu'**un dosage de produit chimique (5) est prévu pour amener un produit chimique de nettoyage au dispositif de filtration (2).

6. Procédé d'exploitation d'une installation de refroidissement par retour d'air selon l'une des revendications 1 à 5, dans lequel une surface de l'échangeur de chaleur (21) est refroidie par mouillage avec de l'eau et l'eau est collectée dans le bassin de collecte (28),
l'eau du bassin de collecte (28) étant amenée au réservoir d'eau de circulation (6) au moyen de la première conduite (29),
la pompe de filtration (7) faisant circuler l'eau de refroidissement de retour dans le circuit de nettoyage, de sorte que l'eau est nettoyée au moyen du dispositif de filtration (2), et l'eau nettoyée (1) étant à nouveau amenée au réservoir d'eau de circulation (6) par une conduite, l'eau se trouvant dans le réservoir d'eau de circulation (6) étant recyclée en tant qu'eau de refroidissement purifiée (9) via la deuxième conduite (31) dans le flux d'air pour mouiller à nouveau la surface de l'échangeur de chaleur (21).

7. Procédé selon la revendication 6,
**caractérisé en ce que** l'eau de refroidissement de retour est nettoyée à l'aide d'un filtre à membrane.

8. Procédé selon la revendication 6 ou 7,
**caractérisé en ce que** le filtre est régulièrement rincé à l'eau ou à l'air ou à un mélange d'eau et d'air.

9. Procédé selon la revendication 8,
**caractérisé en ce que** le rinçage est effectué dans le sens inverse de l'écoulement ou dans le sens de l'écoulement lors du fonctionnement du filtre.

10. Procédé selon la revendication 8 ou 9,
**caractérisé en ce qu'**un produit chimique de nettoyage est ajouté lors du rinçage.

11. Procédé selon l'une quelconque des revendications 6 à 10,
**caractérisé en ce que** l'eau de refroidissement de retour soit recyclée de manière cyclique ou permanente dans le circuit de nettoyage.

12. Procédé selon l'une quelconque des revendications 6 à 11,
**caractérisé en ce que** le circuit d'eau de l'installation de refroidissement de retour et le circuit de nettoyage fonctionnent simultanément ou en alternance.

13. Procédé selon l'une quelconque des revendications 6 à 12,
**caractérisé en ce que**
on ajoute un biocide à l'eau de refroidissement de retour, le biocide ajouté à l'eau de refroidissement de retour étant de préférence du dioxyde de chlore ayant une concentration en substance active de 3000 ppm ou de l'hypochlorite de sodium ayant une concentration en substance active de 1600 ppm, en une quantité ne dépassant pas 0,3 mg/l d'eau et par heure.
